Europäisches Patentamt

European Patent Office

Office européen des brevets

(11) Veröffentlichungsnummer: **0 035 582**
**A1**

(12) # EUROPÄISCHE PATENTANMELDUNG

(21) Anmeldenummer: **80101230.3**

(22) Anmeldetag: **11.03.80**

(51) Int. Cl.³: **C 03 B 11/08**
C 03 B 9/04, C 03 B 11/00
C 03 B 21/02

(43) Veröffentlichungstag der Anmeldung:
**16.09.81 Patentblatt 81/37**

(84) Benannte Vertragsstaaten:
**AT BE CH FR GB IT NL SE**

(71) Anmelder: **Forma Glas GmbH & Co. KG**
**Schwarzstrasse 21**
**A-5020 Salzburg(AT)**

(72) Erfinder: **Füller, Hermann**

**D-8356 Riedlhütte 803(DE)**

(74) Vertreter: **Grams, Klaus Dieter, Dipl.-Ing. et al,**
**Patentanwälte Jaeger, Grams & Pontani Kreuzweg 34**
**D-8031 Stockdorf(DE)**

(54) Verfahren zum Pressen von Glasgegenständen und Vorrichtung zur Durchführung dieses Verfahrens.

(57) Verfahren zum Pressen von Glasgegenständen, insbesondere von Glasfüssen mit damit einstückigen Stielen durch Einpressen eines Teils eines Glaspostens in eine Form mit der Kontur des gewünschten Glasgegenstandes, wobei der andere Teil des Glaspostens außerhalb der Form zurückbleibt und danach der Glasgegenstand von dem Restteil des Postens getrennt wird, gekennzeichnet durch ein Abschneiden des noch plastischen Verbindungsstranges zwischen dem Restteil des Postens und dem Glasgegenstand nach dem Preßvorgang direkt an dem Glasgegenstand und nach dem Ausformen des Glasgegenstandes ein Entfernen des am Glasgegenstand verbliebenen Strangansatzes.

EP 0 035 582 A1

Die Erfindung betrifft ein Verfahren zum Pressen von Glasgegenständen, insbesondere von Glasfüssen mit damit einstückigen Stielen durch Einpressen eines Teils eines Glaspostens in eine Form mit der Kontur des gewünschten Glasgegenstandes, wobei der andere Teil des Glaspostens außerhalb der Form zurückbleibt und danach der Glasgegenstand von dem Restteil des Postens getrennt wird sowie eine Vorrichtung zur Durchführung dieses Verfahrens mit einer Form mit einem Formabschluß, der eine Außenfläche des Glasgegenstandes begrenzt und ausbildet und eine Öffnung zum Einpressen des Glases in die Form aufweist.

Bei diesem Verfahren bzw. dieser Vorrichtung besteht, wie seit langem bekannt ist, die Schwierigkeit des Trennens des schon geformten Glasgegenstandes von der in der Presse zurückgebliebenen Restmenge des zur Pressung verwendeten Glaspostens. Bisher wurde der Glasgegenstand entnommen, wobei sich der Verbindungsstrang bis zu einem Abriß auseinander ziehen ließ. Der Rest des Verbindungsstranges mußte dann aufwendig in kaltem Zustand abgeschnitten werden bzw. es hatte eine erneute Erhitzung zum Abschmelzen des Ansatzes zu erfolgen. Ein an sich naheliegendes Abschneiden hat sich als undurchführbar erwiesen, da bei den bekannten Schneidvorrichtungen die Ansätze zu groß blieben, wenn nicht sogar wegen der bereits hohen Plastizität des Glases beim Pressen der Schneidvorgang überhaupt unmög-

2

lich wurde.

Es ist weiterhin bekannt, den für die Pressung verwendeten Glasposten sehr genau zu dosieren und dann eine Pressung vorzunehmen, bei welcher etwaige Dosierungstoleranzen einen Einfluß auf die Dicke des Fußes, nicht aber auf die Gesamthöhe des Fußes mit Stiel haben. Diese Preßverfahren sind aber nachteilig nur mit sehr hohem apparativem Aufwand und unter Benutzung von einer Anzahl von Verschleißteilen durchführbar und werden daher nur für die Herstellung von sehr hochwertigem Qualitätsglas eingesetzt.

Es ist demgegenüber Aufgabe der Erfindung, ein besonders einfaches Verfahren und eine wirtschaflich herstellbare und betreibbare Vorrichtung zu schaffen, welche das Pressen eines Glasfußes mit damit einstückigem Stiel ermöglichen, ohne daß die genannten Nachteile auftreten. Insbesondere soll der Ansatzpunkt des bei der Pressung entstandenen Glasstranges nicht sicht- oder fühlbar sein, das Verfahren für hohe Stückzahlen geeignet sein und die Vorrichtung zur Durchführung des Verfahrens besonders störunanfällig und für die vollautomatische Fertigung geeignet sein.

Überraschend für den Fachmann hat es sich gezeigt, daß eine Lösung der anstehenden Probleme mit einfachen technischen Mitteln möglich ist, nämlich durch ein Abschneiden des Stranges direkt nach der Pressung und direkt am Glasgegenstand, wobei als Schneidwerkzeug zwei mit einander in Übereinstimmung brinbare und gegeneinander verschwenkbare Kugelschalen Verwendung finden, von denen die gegenüber dem Strang bewegbare an ihrer Öffnung eine Panzerung aufweist.

Im einzelnen wird das erfindungsgemäße Verfahren ausgeführt durch ein Abschneiden des noch plastischen Verbindungsstranges zwischen dem Restteil des Postens und dem Glasgegenstand nach demPreßvorgang direkt an dem Glasgegenstand und nach dem Ausformen des Glasgegenstandes durch ein Verschmelzen des am Glasgegenstand verbliebenen Strangansatzes.

Besonders vorteilhaft kann die Entfernung des Strangansatzes dadurch geschehen, daß der Strangansatz durch Wärmeenergie mit seinem Umgebungsglas glattflächig verschmolzen wird.

Vorrichtungsgemäß kennzeichnet sich die Lösung der erfindungsgemäßen Aufgabe dadurch, daß die von demGlasgegenstand her gesehen äußere Seite des Formabschlusses kugelig ausgeschnitten ist und sich in diesem Ausschnitt ein Schneidteil mit ebenfalls kugliger Oberfläche befindet, das ebenfalls eine Öffnung besitzt, die für das Hindurchtreten des Glases mit der Öffnung des Formabschlusses in Übereinstimmung bringbar ist und wobei das Schneidteil eine Winkelbeweglichkeit besitzt, die am Umfang eine Punktverschiebung größer als der Durchmesser oder die Weite der Öffnung des Formabschlusses ermöglicht.

Vorteilhaft zur Erzielung eines nur sehr geringen Strangansatzes nach dem Schnitt ist der Formabschluß in dem Bereich der Einpreßöffnung sehr dünn und zur Einstellung einer wirtschaftlich sinnvollen Standzeit der Schneidteile kann der Formabschluß aus einer Nickel-Beryllium-Legierung bestehen und das Schneidteil aus Grauguß, wobei am Umfang der Einpreßöffnung eine als Klinge ausgebildete und daran anschließend formabschlußseitig eine als Oberflächen-

4

beschichtung ausgebildete Panzerung aus einer Chrom-Nickel-Legierung aufgebracht ist.

Weiterhin vorteilhaft wird das Schneidteil durch Federkraft gegen den Formabschluß gedrückt und die Bewegung des Schneidteiles wird durch Anlegen bestimmter Flächen an den Formabschluß bzw. dessen Halteringes begrenzt.

Im folgenden wird ein Ausführungsbeispiel der Erfindung anhand einer Zeichnung näher beschrieben. Diese Zeichnung zeigt schematisch im Schnitt den Einpreßbereich bzw. Schneidbereich für das in die Form einzupressende Glas.

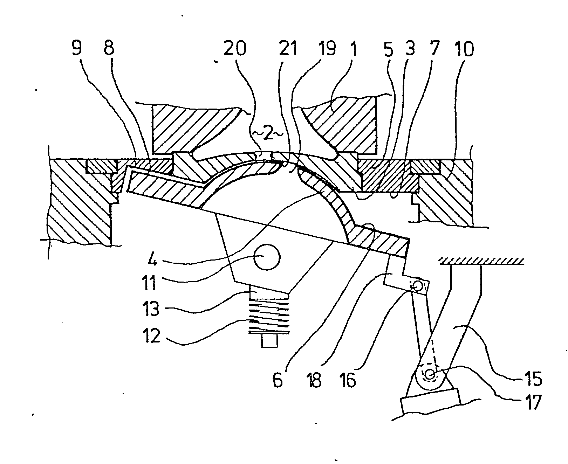

Gemäß der Figur besteht die erfindungsgemäße Vorrichtung im wesentlichen aus einer Form 1, in deren Hohlraum Glas zur Ausformung eines Glasgegenstandes 2 eingepreßt wird. Bei diesem Einpreßvorgang sind die Öffnungen 19 und 20 des Formabschlusses 3 und des Schneidteiles 4 miteinander fluchtend, während sie gemäß derFigur in der Lage nach dem Abschneiden des Glasstranges gezeigt sind.

Die Form 1 wird gemäß der Zeichnung nach unten durch einenFormabschluß 3 abgeschlossen, welcher in einem Tragring 5 in Verbindung mit einem Basisteil 10 gehalten wird. Der Formabschluß 3 ist im Bereich seiner Durchtrittsöffnung für das Glas 20 sehr dünn, z. B. im Bereich von mm oder dem Bruchteil eines mm und an seiner von dem Glasgegenstand abgewandten Seite kugelig ausgeschnitten.

Innerhalb des kugligen Ausschnittes des Formabschlusses 3 bewegt sich ein Schneidteil 4 mit einer Durchtrittsöffnung 19 für das einzupressende Glas, welche an ihrem Umfang eine Panzerung 21 aufweist.

5

Diese Panzerung ist auch noch auf die dem Formabschluß 3 zugewandte Oberfläche des Schneidteils 4 rings um die Öffnung 19 aufgebracht.

Das Schneidteil 4 ist um eine Schwenkachse 11 verschwenkbar, wobei diese über einen Bolzen 13 und Tellerfedern 12 das Schneidteil 4 gegen den Formabschluß 3 drängt. Die Radien des kugligen Ausschnittes des Formabschlusses 3 sowie der dem Glasgegenstand zugewandten Oberfläche des Schneidteils 4 sind gleich, der Mittelpunkt der dadurch ermöglichten Schwenkbewegung entspricht dem Mittelpunkt der Schwenkachse 11.

Seitlich an dem Schneidteil 4 ist eine Schubstange 18 angesetzt, welche über ein Gelenk 16 von einer Druckmittel-Zylinder-Kolben-Anordnung 14 in seiner Position verlagert wird, wobei die Zylinder-Kolben-Anordnung 14 über einen Schwenkbolzen 17 in ihrer Lage verschwenkbar ist. Der Schwenkbolzen 17 wird von einem Anker 15 gehalten, so daß ein Herausfahren des Kolbens der Zylinder-Kolben-Anordnung 14 eine Verdrehung des Schneidteils 4 derart bewirkt, daß die Öffnungen 19 und 20 miteinander fluchten und das Einpressen des Glases aus der nicht gezeigten Glaspresse heraus in den Hohlraum der Form 1 möglich ist. Nach erfolgtem Preßvorgang fährt der Kolben der Zylinder-Kolben-Anordnung wieder ein und bewegt über die Schubstange 18 und das Gelenk 16 den Schneidteil 4 in die in der Figur gezeigte Stellung, wobei ein Abtrennen des Glasstranges zwischen dem in der Presse verbliebenen Restteils des Glaspostens von dem jetzt ausgebildeten Glasgegenstand direkt an dessen Oberfläche erfolgt.

Zur Begrenzung der Drehbewegung während des Schnei-

6

dens sind Anlageflächen 8 des Schneidteiles 4 sowie 9 des Tragringes 5 bzw. des Formabschlusses 3 vorgesehen, während die Bewegung zur Herstellung der Durchtrittsöffnung zum Einpressen des Glases durch die Anlageflächen 6 und 7 begrenzt wird, von denen 7 an dem Tragring und 6 an dem Schneidteil 4 vorliegt.

Erfindungswesentlich ist die Auswahl der Materialien für den Formabschluß und den Schneidteil sowie die Panzerung. Vorzugsweise besteht der Formabschluß 3 aus einer Nickel-Beryllium-Legierung, während das Schneidteil aus Grauguß besteht, auf welches die Panzerung 21 aus einer Chrom-Nickel-Legierung aufgebracht ist. Für den Fachmann überraschend hat sich durch die Wahl der Materialien gezeigt, daß wirtschaftlich sinnvolle Standzeiten nicht nur für die eigentlichen gepanzerten Schnittkanten, sondern auch für den Formabschluß trotz der hohen thermischen und mechanischen Belastungen möglich sind.

In einer weiteren Ausgestaltung der Erfindung kann die Form 1 auch anders herum beschickt werden, wobei dann das Abschneiden des Glasstranges gegenüber der in der Presse verbliebenen Restmasse oben am Kopf des Stieles erfolgt.

Erfindungswesentlich ist es weiterhin, den Ansatz des abgeschnittenen Glasstranges anschließend mit seiner Umgebung zu verschmelzen, wozu ein gasgefeuerter Brenner mit ringförmig an seinem Umfang angeordneten Düsen für das austretende Brenngas dient. Der Durchmesser des Düsenringes ist größer als der Durchmesser des Ansatzes, so daß ein sicheres Verschmelzen bzw. Abschmelzen des Ansatzes ermöglicht wird, ohne daß Stufen sicht- oder fühlbar wären. Unter dem Einfluß der Wärmeenergie glättet sich für den Fachmann überraschend der Strangansatz und verteilt sich auf die umgebende Oberfläche. Während des Verschmelzens, welches unmittelbar nach dem Ausformen des gepreßten Glasgegenstandes erfolgt, so daß eine erneute Erhitzung desselben nicht mehr notwendig ist, wird der Glasgegenstand bzw. der Stielfuß in Rotation gehalten. Der Brenner befindet sich dabei in Verlängerung der Rotationsachse. Da derartige Drehvorrichtungen in der Glasindustrie allgemein bekannt sind, kann auf eine weitergehende Beschreibung derselben verzichtet werden.

Da es bisher noch nicht möglich war, bei einem Schneidvorgang anschließend ein Verschmelzen des verbliebenen Ansatzes zu ermöglichen, der dann nicht mehr sicht- oder fühlbar ist, kann von einer idealen Lösung der anstehenden Probleme gesprochen werden. Dies gilt umso mehr, als die Vorrichtung langzeitig störungs- und wartungsfrei arbeiten kann.

A 1

Patentansprüche:

1. Verfahren zum Pressen von Glasgegenständen, insbesondere von Glasfüssen mit damit einstückigen Stielen durch Einpressen eines Teils eines Glaspostens in eine Form mit der Kontur des gewünschten Glasgegenstandes, wobei der andere Teil des Glaspostens außerhalb der Form zurückbleibt und danach der Glasgegenstand von dem Restteil des Postens getrennt wird, gekennzeichnet durch ein Abschneiden des noch plastischen Verbindungsstranges zwischen dem Restteil des Postens und dem Glasgegenstand nach dem Preßvorgang direkt an dem Glasgegenstand und nach dem Ausformen des Glasgegenstandes ein Entfernen des am Glasgegenstand verbliebenen Strangansatzes.

2. Verfahren nach Anspruch 1, dadurch gekennzeichnet, daß der Strangansatz durch Wärmeenergie mit seinem Umgebungsglas glattflächig verschmolzen wird.

3. Verfahren nach Anspruch 2, dadurch gekennzeichnet, daß das Verschmelzen durch Beaufschlagung des Ansatzbereiches mit einer verhältnismäßig großflächigen Brennerflamme erfolgt.

4. Verfahren nach Anspruch 1 bis 3, dadurch gekennzeichnet, daß das Einpressen des Glases in der Mitte des Glasfußes oder des Stielkopfes erfolgt.

5. Vorrichtung zur Durchführung des Verfahrens nach Anspruch 1 mit einer Form mit einem Formabschluß, der eine Außenfläche des Glasgegenstandes begrenzt und ausbildet und einer Öffnung zum Einpressen des Glases in die Form aufweist, dadurch gekennzeichnet, daß die von dem Glasgegenstand (2) her gesehen äußere Seite des Formabschlusses (3) kugelig ausgeschnitten ist und sich in diesem Ausschnitt ein Schneidteil (4) mit ebenfalls kugliger Oberfläche befindet, das ebenfalls eine Öffnung (19) besitzt, die für das Hindurchtreten des Glases mit der Öffnung (20) des Formabschlusses (3) in Übereinstimmung bringbar ist und wobei das Schneidteil (4) eine Winkelbeweglichkeit besitzt, die am Umfang eine Punktverschiebung größer als der Durchmesser oder die Weite der Öffnung (20) des Formabschlusses (3) ermöglicht.

6. Vorrichtung nach Anspruch 5, dadurch gekennzeichnet, daß die Kugelfläche des Formabschlusses (3) und die der Außenkontur des Schneidteils (4) den gleichen Radius aufweisen.

7. Vorrichtung nach Anspruch 5 oder 6, dadurch gekennzeichnet, daß der Formabschluß (3) im Bereich der Einpreßöffnung (20) sehr dünn ist.

8. Vorrichtung nach Anspruch 5 bis 7, dadurch gekennzeichnet, daß der Formabschluß (3) aus einer Nickel-Beryllium-Legierung besteht.

9. Vorrichtung nach Anspruch 5 bis 8, dadurch gekennzeichnet, daß das Schneidteil (4) am Umfang der Einpreßöffnung (19) eine als Klinge ausgebildete und daran anschließend formabschlußseitig eine als Oberflächenbeschichtung ausgebildete Panzerung (21) aus einer Chrom-Nickel-Legierung aufweist.

10. Vorrichtung nach Anspruch 5 bis 9, dadurch gekennzeichnet, daß das Schneidteil (4) durch Federkraft gegen den Formabschluß (3) gedrückt wird und in seinen Arbeitslagen (Einpressen des Glases bzw. nach dem Schnittvorgang) mit Teilen (6, 8) seiner Umfangsfläche gegen Anlageflächen (7, 9) des Formabschlusses (3) bzw. des Halteringes (5) dafür anliegt.

11. Vorrichtung nach einem der Ansprüche 5 bis 10, gekennzeichnet durch einen Brenner mit an seinem Umfang verteilten Düsen für das austretende, zu verbrennende Medium in Verlängerung der Mittelachse einer Haltevorrichtung für die entnommenen Füsse mit damit einstückigen Stielen.

1/1

0035582

0035582

**Europäisches Patentamt**

# EUROPÄISCHER RECHERCHENBERICHT

Nummer der Anmeldung

EP 80 10 1230.3

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | DE - A1 - 2 821 930 (BLEIKRISTALLWERKE F.X. NACHTMANN) <br> * Anspruch 1, Seite 7, Absatz 2 * <br> -- | 1,4 |
| | FR - A1 - 2 338 228 (SAINT-GOBAIN INDUSTRIES) <br> * Fig. 11 bis 13 * <br> -- | 1 |
| A | DE - C - 742 457 (R. SCHRÖTER) <br> -- | |
| A | US - A - 1 996 910 (DUNCAN, JR. et al.) <br> -- | |

**KLASSIFIKATION DER ANMELDUNG (Int.Cl.3)**

C 03 B 11/08
C 03 B 9/04
C 03 B 11/00
C 03 B 21/02

**RECHERCHIERTE SACHGEBIETE (Int. Cl.3)**

C 03 B 7/00
C 03 B 9/00
C 03 B 11/00
C 03 B 21/00
C 03 B 23/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 07-11-1980 | HÖRNER |

EPA form 1503.1  06.78